# EUROPEAN PATENT SPECIFICATION

(11) **EP 3 375 030 B1**
(45) Date of publication and mention of the grant of the patent: **05.08.2020**
(21) Application number: 16864952.3
(22) Date of filing: 09.11.2016
(51) Int. Cl.: H01M 4/133, H01M 4/20, H01M 4/96, H01M 4/88, H01M 4/04, H01M 8/18

(54) **IMPROVED ELECTRODE FOR REDOX FLOW BATTERY**
VERBESSERTE ELEKTRODE FÜR REDOX-FLUSSBATTERIE
ÉLECTRODE AMÉLIORÉE POUR BATTERIE RÉDOX

(30) Priority: 13.11.2015 US 201562254711 P
(43) Date of publication of application: 19.09.2018
(73) Proprietor: Avalon Battery (Canada) Corporation, Vancouver, British Columbia V5L 1G8 (CA)
(72) Inventor: SUN, Che-Nan, Williamsville, New York 14221 (US); GENDERS, David, Elma, New York 14059 (US); SYMONS, Peter, Williamsville, New York 14221 (US)
(74) Representative: Beyer, Andreas
(86) International application number: PCT/US2016/061204
(87) International publication number: WO 2017/083439

(56) References cited:
- EP-A1- 2 876 712
- WO-A1-2012/051973
- WO-A1-2013/095380
- DE-A1-102013 217 882
- US-A- 4 835 074
- US-A- 4 944 991
- US-A- 5 636 437
- US-A1- 2002 160 251
- US-A1- 2002 160 251
- US-A1- 2012 258 345
- US-A1- 2013 017 461
- US-A1- 2013 177 789
- US-B1- 8 728 671

## Description

### Technical Field

The present invention pertains to electrodes for redox flow batteries, and particularly to electrodes based on porous carbon felts for vanadium redox flow batteries.

### Background

Redox flow batteries, such as vanadium redox flow batteries, continue to show promise for storing large amounts of electrical energy, such as for load levelling applications. A redox flow battery with a low internal resistance is desirable for attaining high efficiency operation, high power density and for driving reductions in cost. In a redox flow battery, there are three major processes that contribute to the internal cell resistance, namely electrode reaction kinetics, ohmic losses and diffusion processes. The kinetic overpotential is associated with the processes taking place at the electrode surface during battery operation. Factors that can affect the kinetic overpotential include electrode surface area (which impacts the real current density), operating temperature, reaction constant of the redox chemistry, and concentration of the active material. For instance, high surface area porous electrodes are commonly used in such batteries in order to reduce the kinetic overpotential. The ohmic overpotential reflects the electronic resistance, ionic resistance, and contact resistance in the battery. High component conductivities along with a short conduction path are desirable to reduce the electronic and the ionic resistances. In a typical redox flow battery, the electronic resistance is largely determined by the electronic conductivity and the thickness of both the bipolar plates and the electrodes therein. The ionic resistance is associated with the characteristics (thickness, ionic conductivity) of the membrane/separator and the electrolyte therein. In addition, a typical redox battery comprises a stack of multiple layers of components. Between each interface, a contact resistance exists which further contributes to the ohmic overpotential during operation. The diffusion overpotential represents the voltage loss that is required to bring the active species to the electrode surface. Generally, the diffusion overpotential is sensitive to the concentration of the active species, diffusion coefficient, porous structure, and flow characteristics. In order to realize a high performance redox flow battery, it will be important to optimize these factors via advanced cell design, and preferably with inexpensive materials.

To enhance performance, porous electrodes are typically employed in redox flow batteries to increase the available surface area for better efficiency. The most commonly used porous materials are carbonaceous felts and papers due to their good electronic conductivity, high stability and low cost. However, battery performance can be limited when using pristine commercially available carbon felts and papers due to slow inherent kinetics (particularly on the V2/3 side of a vanadium redox battery). As a result, modifications of carbon electrodes made with these materials are generally needed in order to improve the performance further. At the moment, the modification methods being considered include heat treatment, electrochemical plating of the catalyst materials, and impregnation of various suitable additives including carbon and hydrophilic modifiers.

Heat treatment is probably the most commonly used method to modify such carbon electrodes. In this method, the porous carbon material in the electrode is treated at elevated temperature (i.e. over 400°C) in an oxygen containing atmosphere (e.g. air) for a sufficient time (e.g. minutes to several hours) in order to achieve oxidation of the porous carbon material to varying degrees. Thus, advantages of this treatment approach include simplicity and low cost. Oxidized felts or papers show enhanced performance presumably due to increased surface area and/or the incorporation of functional groups on the carbon surfaces which promote the desired electrochemical processes. Heat-treated carbonaceous papers, cloths, and felts have been adopted as redox flow battery electrodes and show significant performance improvements. However, carbon paper is characterized by relatively high costs and thin dimensions (e.g. 200-400 µm) and thus a serpentine flow field on the bipolar plates, or other electrolyte distribution means, are usually required in a flow battery in order to operate at reasonable hydraulic pressure. The performance improvement is significant but these requirements raise the system capital cost. Carbon felts on the other hand, while less expensive, have a greater thickness and pore size and therefore do not require the flow field and mechanical support provided by an adjacent bipolar plate. As a result, a low cost and thin bipolar plate can be used in such a system. Nevertheless, the relatively low surface area and larger thickness of such felts introduce a higher kinetic overpotential and longer ionic conduction pathway, and therefore the cell resistance is higher. Further improvement is thus desirable.

An alternative way to facilitate the reaction kinetics of a porous electrode is to incorporate catalyst material into the carbon felt or paper. The successful catalyst should be stable, low cost, and highly electrically conductive. Moreover, the incorporated catalyst should have a high hydrogen evolution overpotential, and should not negatively impact the other cell components (e.g. membrane and electrolyte) if dissolved. Moreover, the presence of any metal containing catalyst or hydrophilic modifier should not promote side reactions such as (but not limited to) hydrogen, oxygen or chlorine evolution. It appears challenging to identify a catalyst that fulfills all the criteria according to the available literature.

Recently, as disclosed in the Journal of The Electrochemical Society, 161 (6) A1132-A1138 (2014), carbon electrodes were decorated with carbonaceous particles to enhance the active area and these electrodes were demonstrated to have improved cell performance. In this case, the hydrophilicity of the additive was important in order to access the useful surface area as well as develop a network for ionic conduction. In some cases, TiO₂ particles had been impregnated with carbon particles serving as a wetting agent (to improve the electrode wettability) and a polymeric material was employed as a binder to anchor the carbon particles to the carbon fiber matrix. However, the TiO₂ and the polymer binder do not participate in the electrochemical reactions and may block some of the active sites. In addition, the through-plane distribution of the carbon particles is expected to be crucial to control the reaction zone and therefore minimize the voltage loss due to ionic and electronic conduction in the electrode. This point had not been extensively addressed.

Document WO 2012/051973 A1 describes a carbon-carbon composite that can be used for electrodes in redox flow batteries. The production process comprises the infiltration of a carbon carrier material with a dilute polymer solution, wherein a polymer layer is accumulated on an inner surface of a carrier material via a sol-gel process with a subsequent drying step, and wherein the carbon-carbon composite is produced by pyrolysis. In particular, the carbon conversion takes place by thermal decomposition of organic components of the composite at temperatures between 500°C and 1100°C in oxygen free atmosphere, whereby the carbon-carbon composite is produced.

In document DE 10 2013 217 882 A1, a porous electrode substrate for redox flow batteries is described that comprises a structure of carbon fibers and a carbon matrix produced by impregnating the substrate by a water-based dispersion of carbon particles, binder substances and doping agents followed by subsequent carbonization.

Document WO 2013/095380 A1 describes a flow battery including a liquid electrolyte having an electrochemically active species, and an electrode including a carbon paper that is catalytically active with regard to the liquid electrolyte. In an embodiment, the carbon paper is a carbon-carbon composite including carbon fibers and a carbon binder residue.

From document EP 2 876 712 A1, a further redox flow battery is known, which comprises a solid carbon-based electrode and an acidic vanadium based electrolyte having carbon particles dispersed therein to form a semisolid electrode.

Document US 2002/160251 A1 discloses a metal-air battery.

Document US 8 728 671 B1 discloses a positive electrode including an electrically conductive scaffold, conductive catalytic A-site deficient perovskite particles chemically bonded to the scaffold, ion and gas permeable ionomer connecting the particles, and a hydrophobic porous layer on the scaffold.

In document US 5 636 437 A, the fabrication of conductive solid porous carbon electrodes for use in batteries is described.

While there have been many advances towards improving electrodes for redox flow batteries, there is still a need for lower resistance, higher efficiency designs. The present invention addresses this need and provides other benefits as disclosed below.

### Summary

The present invention relates to a redox flow battery according to claim 1 and a method for making an electrode of this redox flow battery according to claim 14.

In particular, the present invention provides improved porous carbon felt electrodes for redox flow batteries by suitably oxidizing carbon particles impregnated into the porous carbon felt. The carbon particles are suitably oxidized when the oxidation is sufficient to make the particles wettable by water. The electrode resistance and voltage efficiency of cells comprising such electrodes can be substantially improved due to enhanced surface area and hydrophilicity.

The invention comprises a sheet of porous carbon felt in which both carbon particles and ionomer have been impregnated into the porous carbon felt, and in which the impregnated carbon particles have been oxidized. In a preferred embodiment, the electrode may comprise both a sheet of porous carbon felt which has been oxidized at a temperature above 500 °C, and impregnated carbon particles which have been oxidized.

In yet another potential embodiment of the invention, oxidized carbon particles may be deposited directly (e.g. in combination with ionomer) onto the membrane electrolyte, thereby forming the improved electrode directly on the membrane. Such an embodiment would thus be an electrolyte/electrode assembly and could be considered as a carbon catalyst coated membrane. A porous carbon felt or other porous, conducting material may optionally be located adjacent the carbon catalyst coated membrane.

A suitably oxidized porous carbon felt may have been oxidized in air at 600 °C for about 20 minutes. The improved carbon felts may typically be less than or about 5 mm thick, and particularly less than or about 3 mm thick. Suitable carbon felts for use in the invention include pyrolyzed polyacrylonitrile felts.

Suitable carbon particles for use in the invention include carbon black or activated carbon. The carbon particles can be suitably oxidized in a variety of ways, including chemical treatment, thermal treatment, and electrochemical treatment. For instance, the carbon particles can be oxidized by a chemical treatment method comprising exposing the carbon particles to an appropriate strength persulfate (e.g. 1M ammonium persulfate) for a sufficient time at a suitable temperature (e.g. 70 °C). Alternatively, the carbon particles can be oxidized by a thermal treatment method comprising exposing the carbon particles to air (e.g. in a fluidized bed arrangement) in a range between about 350 and 750 °C. In yet another alternative, the carbon particles in the carbon-particle-decorated carbon felt may be oxidized electrochemically, for instance by operating as a positive electrode for a suitable period. Cell polarity can then be reversed to allow the oxidized felt to serve as the negative electrode in the subsequent operation or to perform the electrochemical oxidation on the opposite electrode. The carbon particles have been suitably oxidized when the oxidation is sufficient to render the particles wettable by water.

In relevant embodiments, the specific loading of the impregnated carbon particles to the sheet of carbon felt can desirably be in the range from about 0.5 to 2.3 mg/cm². Further, the ionomer employed can be a perfluorosulfonic acid polymer and the weight ratio of the ionomer to the carbon particles can desirably be less than or about 0.05.

The present invention includes improved electrodes for redox flow batteries and redox flow batteries comprising such electrodes. The invention is particularly suitable for use in vanadium redox flow batteries. The invention further includes methods for making such electrodes. In one embodiment, the method comprises obtaining a suitable sheet of porous carbon felt, carbon particles and ionomer, preparing a mixture of the oxidized carbon particles, the ionomer, and a solvent, impregnating the mixture into the porous carbon felt, and finally removing (e.g. via drying) the solvent from the impregnated porous carbon felt. The impregnating step may be accomplished in various ways known to those skilled in the art. For instance, the impregnating step can comprise spraying or soaking the porous carbon felt with the solution mixture. Alternatively, the impregnating step can comprise painting or mechanically coating the porous carbon felt with a suitably prepared mixture.

### Detailed Description

Unless the context requires otherwise, throughout this specification and claims, the words "comprise", "comprising" and the like are to be construed in an open, inclusive sense. The words "a", "an", and the like are to be considered as meaning at least one and not limited to just one.

In addition, the following definitions are intended. In a numerical context, the word "about" is to be construed as meaning plus or minus 10%.

Carbon felt, as defined herein, is comprised of carbon fibers which have been formed into a mat substantially thicker than a single fiber with a high porosity (i.e. % void volume >70 %) via a mechanical needle punch process. The formed or "felted" mat can be created from non-pyrolyzed fibers such as rayon or polyacrylonitrile (PAN). Alternatively, the felt mat may be created from partially or fully oxidized carbon fibers. Pyrolyzing conditions vary greatly but are typically between 700 - 2300 °C in an inert atmosphere. Carbon felt is distinct and different from other forms of carbon sheet such as woven and non-woven papers which are not formed using a needle punch step and are characteristically much thinner than carbon felt.

Further, carbon particles are considered to be "wettable by water" herein when most of the mass of the sample particles is found either to sink or to form a suspension after initially mixing a small representative sample of the particles in de-ionized water. In contrast, non oxidized particles which are not "wettable by water" float on the surface of the de-ionized water.

The present invention relates to electrodes and methods for making electrodes in order to improve the performance of redox flow batteries. Obtaining the greatest performance out of a redox battery requires minimizing both the kinetic and ohmic losses. As is often the case, a compromise may need to be made since a higher surface area electrode (which might be achieved for instance by using a thicker material such as a thicker carbon felt) would improve the apparent kinetics (at a given geometric current density) but may lead to higher ohmic resistance of the electrode. However, by incorporating high surface area particles at a suitable location, it may be possible to shift the reaction zone towards the membrane electrolyte and reduce the distance of ionic conduction. This would then allow the use of a felt electrode structure at low ohmic loss and cost. In one aspect of the present invention, oxidized carbon particles serve as such a high surface area catalyst with active sites. The carbon particles are incorporated or impregnated into a porous carbon matrix (e.g. carbon felt). The presence of these oxidized carbon particles can result in improvements in electrode resistance and efficiency when employed in a redox battery.

Suitable carbon particles to be oxidized and incorporated in accordance with the invention include carbon black, activated carbon, and other high surface area forms of carbon. Suitable methods for oxidizing the carbon particles before incorporation into a porous carbon felt include chemical, heat, and/or electrochemical treatments. A suitable chemical treatment can involve contacting the carbon particles with oxidizing agents other than air and/or oxygen to cause a carbon oxidation reaction on the particles. A suitable thermal treatment can involve contacting the carbon particles with air and/or oxygen containing gases while thermally heating to cause a carbon oxidation reaction on the particles. A suitable electrochemical treatment can involve using electrochemical treatment to cause a carbon oxidation reaction on the particles. As demonstrated in the Examples below, an effective chemical treatment comprises exposing the carbon particles to a concentrated persulfate solution for an appropriate time at an appropriate temperature. It is also expected that heating in air in a range between about 350 and 750 °C would also be effective. Further, it should also be possible to effect oxidation using an appropriate electrochemical treatment. Such oxidation treatments introduce oxygen functionality onto the carbon surface and improve hydrophilicity, and can result in increased useful electrode surface area.

After oxidation, the carbon particles can then be impregnated into a suitable porous carbon felt via an ink type application method. (Alternatively, other application methods may be employed instead. For instance, the carbon particles may be impregnated using an appropriate mechanical coating method.) When using an ink type application method, initially an ink is prepared by mixing the oxidized, high surface area carbon particles with a binder (e.g. Nafion®, PVDF, Teflon, or other polymers) in one or more solvents (e.g. aqueous, non-aqueous, or mixtures thereof). Preferably the binder is an ionomer such as perfluorosulfonic acid polymer to avoid blocking access of the electrolyte to the particle surfaces. Further, the amount of binder is preferably kept low (e.g. ionomer/carbon weight ratio of about less than 0.05) to enhance the accessibility of the active sites. The ink may be sonicated and/or stirred to achieve a homogeneous distribution.

The prepared ink is subsequently applied to the porous carbon felt via application techniques such as airbrushing, spraying, painting, or soaking. As shown in Examples below, a soaking technique may be preferred in order to increase the weight of carbon impregnated and improve results. The impregnated carbon electrode is then dried in order to remover the carrier solvent, for instance in an oven, at temperatures ranging from room temperature up to 200°C, in air or under vacuum.

With regards to oxidizing the porous carbon felt in accordance with the invention, a suitable method can simply involve heating a selected felt to a temperature exceeding 500 °C in air for a given time. As with the carbon particles, oxidizing the felt in this way should further increase the oxygen functionality and enhance wettability of the carbon felt in the electrode.

Advantages of impregnating oxidized carbon particles into the carbon felts of such electrodes include increasing the electrode surface area and allowing the use of thinner felts without the penalty of a kinetic overpotential increase. In turn, a thinner carbon felt should offer lower electronic resistance due to shorter electronic conduction path. Moreover, focusing the carbon impregnation on the side of the electrode which contacts the membrane/separator should assure that the high surface area is provided closer to the electrode/membrane interface. Utilizing the hydrophilic nature of the carbon particles, the reaction zone should be directed toward the electrode/membrane interface and thus reduce the ion conduction path. This is particularly helpful in the case where the ionic conductivity is lower than the electronic conductivity, which is more likely in electrochemical systems. The resulting electrode would have high surface area and a structure with large open pores (being a property of the porous carbon felt) thereby facilitating electrochemical processes (kinetics and mass transport) without the assistance of an external flow field. Further, the use of carbon particles provides the potential for tailoring properties of the product electrode. The geometry, functional groups, and properties of the carbon particles can themselves be tailored before impregnating into a felt in order to optimize performance. Functional groups on the carbon surface can be further modified to facilitate electron transfer kinetics, electrolyte access (wettability), and mass transfer limitations.

General advantages of the invention, whether oxidizing carbon particles to be impregnated or oxidizing the host carbon felt or both, include simplicity and cost. For instance, no electrochemical process need be involved and the majority of the materials required are solvents and carbons which can both be relatively inexpensive. Either process of course results in a higher performance electrode material with potentially high durability. Further, the methods offer flexibility in that a distributed electrochemical surface area can be realized throughout the electrode thickness and thus further control the reaction zone. A yet further potential advantage of a high surface area electrode with improved electrode kinetics is that by operating at lower overpotentials, it may be possible to relax the metallic contaminant specifications required of the electrolytes used.

Without being bound by theory, it is believed that the oxidation steps involved in the present invention generally increase activity for desirable electrochemical reactions by adding surface area and functional oxygen groups on the carbon surface. Further, the presence of these groups increase hydrophilicity and hence access of electrolyte to the various carbon surfaces. The effect on electrode performance is surprisingly substantial.

The following Examples have been included to illustrate certain aspects of the invention but should not be construed as limiting in any way.

### Examples

A series of electrodes and both laboratory type and commercial size vanadium redox flow batteries were made and tested in order to compare the characteristics of electrodes and cells of the invention to those of a conventional electrodes and cells.

Sample electrodes were prepared using commercially available porous carbon felts in selected thicknesses. The carbon felts were all prepared by pyrolyzing precursor polyacrylonitrile felts. As summarized in Table 1 below, certain sample felts were initially oxidized by heating in air at the indicated temperature for the indicated amount of time.

For some samples, carbon particles were impregnated into the carbon felt using an ink type application method. The carbon particles were a commercially available carbon black (Vulcan XC-72). The wettability of the carbon black was determined by taking a 50 mg sample and mixing into a test tube of 5 ml of de-ionized water. Virtually all the mass of the particles floated indicating that the commercially obtained carbon particles were not wettable by water as defined herein.

Where indicated, the carbon particles were first oxidized using a chemical treatment method comprising soaking the particles in 1M ammonium persulfate solution at 70°C for about 2 hours. After soaking, the solution was cooled and filtered off using 0.02 µm filter paper. The carbon particles were then rinsed with distilled water and dried overnight under vacuum at 100°C. The wettability of the oxidized carbon black particles was then determined in a similar manner. Here, virtually all the mass of the particles formed a homogeneous suspension in the test tube indicating that the oxidized carbon particles were wettable by water.

The impregnating inks were prepared by mixing together the appropriate carbon black and isopropanol and then sonicating. Nafion® ionomer dispersion was then added and stirred and finally additional isopropanol solvent was added. The ionomer to carbon particle weight ratio in these mixtures, and hence in the sample electrodes produced, are indicated in Table 1 below. In these Examples, the inks were either applied by an airbrush spraying method or by a soaking method. The impregnated sample felts were then dried at ambient temperature for about 1 hour and then in air at 90°C for several more hours. The spraying application method applies the ink solids preferentially one side of the felt. The soaking method applies the ink solids more uniformly throughout the felt. Consequently the weight of solids applied using the spraying method was significantly less than that applied by soaking. The weight of solids applied also is indicated in Table 1 below.

Laboratory type single cell vanadium redox batteries were then prepared using the prepared electrode samples in cells comprising a separating ionomer membrane electrolyte. In all cases where airbrush spraying had been used, the felt electrodes were oriented in such a way that the airbrushed side was located against the ionomer membrane. In initial testing, microcells (about 10 cm² in area) were made with perfluorosulfonic acid ionomer membranes or anion membranes sandwiched by two similarly prepared electrode samples. The assemblies were compressed between bipolar plates allowing the electrolyte (approximately 1.8M vanadium/4.2 M sulfate) access to the electrodes. Preliminary values of the kinetic and ohmic resistances were measured and, in all but one instance, the values were evaluated to warrant further, more thorough testing. This was accomplished by testing a larger electrode area in larger redox cells. (The resistance of comparative sample 3 was so high in microcell testing that a larger redox cell was not made therewith. Instead, an estimate of the electrode characteristics based on the microcell results was provided in Table 1 below.) These larger redox cells were about 170 cm² in area. Here, identical felt samples were applied to both sides of the membrane. Again, bipolar plates were used to compress the assemblies together and again a liquid electrolyte of approximately 1.8M vanadium/4.2 M sulfate was supplied to the cell.

The larger, single cell, redox cells were operated and performance characteristics were determined. In summary Table 1 below, the cell temperature and current density used in the testing are indicated. Where determined, the resistance of the electrode, the voltage efficiency (VE), the energy efficiency (EE) and the estimated peak power density expected from a cell comprising such electrodes are provided. In particular, the peak power density is estimated through equation P = E²/4F, where P is the peak power density, E is the cell open circuit voltage (OCV) and R is the total equivalent area specific resistance, including over-potential, diffusion and mass transport.

Herein, columbic Efficiency (CE) is the ratio of measured amps-hrs (Ah) input to the system under test divided by the measured amp-hrs (Ah) discharged from the test system at the stated constant current charge / discharge conditions while operating the cell over the full operating state of charge (SOC) range, typically between 15 and 85% SOC. Energy Efficiency (EE) is the ratio of measured kWh input to the system under test divided by measured kWh discharged from the test cell at the stated constant current charge / discharge conditions while operating the cell over the full operating SOC range, typically between 15 and 85% SOC. Voltaic Efficiency (VE) is calculated as the ratio of EE/CE.

**Table 1**

| **Sample** | **Carbon felt thickness; and heat treatment (HT)** | **Carbon added?; and method & amount added** | **Carbon oxidation?; and method** | **Ionomer to carbon weight ratio** | **Testing temp and current density** | **Resistance (ohm cm²)** | **VE** | **EE** | **Est. peak power (mW/cm²)** |
|---|---|---|---|---|---|---|---|---|---|
| 1 | 4mm; no HT | No | Not applicable | Not applicable | 35°C; 80mA/cm² | 2.08 | 79% | | |
| 2 | 4mm; 650°C for 30 min | No | Not applicable | Not applicable | 35°C; 80mA/cm² | 1.17 | 87% | | |
| 3* | 2.5mm; no HT | Yes; spray; ∼0.5mg/cm² | Not applicable | 0.1 | 35°C; 80mA/cm² | >2 (estimated) | n/a | | |
| 4 | 3mm; 600°C for 20 min | Yes; spray; ∼0.5mg/cm² | Treated with 1M persulfate at 70°C for ∼2 hours | 0.05 | 35°C; 80mA/cm² | 0.93 | 89% | 82% | 605 |
| | | | | | 45°C; 80mA/cm² | 0.78 | 90% | 84% | 721 |
| 5 | 3mm; 600°C for 20 min | No | Not applicable | Not applicable | 35°C; 80mA/cm² | 1.09 | 88% | | |
| 6 | 3mm; 600°C for 20 min | Yes; soak; ∼2.3mg/cm² | Not applicable | 0.01 | 35°C; 80mA/cm² | 0.95 | 89% | 85% | 592 |
| | | | | | 35°C; 160mA/cm² | 0.95 | 81% | 78% | |
| 7 | 4mm; 650°C for 30 min | No | Not applicable | Not applicable | 35°C; 160mA/cm² | 1.20 | 77% | | |
| 8 | 3mm; 600°C for 20 min | No | Not applicable | Not applicable | 35°C; 160mA/cm² | 1.14 | 78% | | |
| 9 | 3mm; 600°C for 20 min | Yes; spray; ∼0.5mg/cm² | Treated with 1M persulfate at 70°C for ∼2 hours | 0.05 | 35°C; 160mA/cm² | 0.99 | 81% | 78% | 568 |
| 10 | 4mm; 650°C for 30 min | No | Not applicable | Not applicable | 35°C; 139mA/cm² | 1.43 | 79% | | |
| 11 | 4mm; 650°C for 30 min | Yes; spray; ∼0.5mg/cm² | Treated with 1M persulfate at 70°C for ∼2 hours | 0.05 | 35°C; 139mA/cm² | 1.26 | 78% | | |

| | | | | | | | | | |
|---|---|---|---|---|---|---|---|---|---|
| *This sample was only evaluated in the 10cm² laboratory cell due to the very high initial resistance observed. | | | | | | | | | |

In the above results, note that resistance values are generally lower and voltage efficiencies are generally higher at higher testing temperatures. However, voltage efficiencies are generally lower at higher testing current densities.

The comparative sample 1 represents a typical conventional vanadium redox battery embodiment. A relatively thick (4 mm) carbon felt was used here with no additional oxidation performed on the felt and no carbon particles were added.

The comparative sample 3 used a substantially thinner carbon felt (2.5 mm) but incorporated carbon particles therein for potential improvement. No additional oxidation was performed on the felt and the impregnated carbon particles were not oxidized in this example. The resistance results here were unacceptably poor. The electrode was found to be highly hydrophobic with a kinetic resistance about 5 times higher and an ohmic resistance about 15 times higher than subsequently prepared oxidized (hydrophilic) electrodes.

At any given set of testing conditions, in all cases where the carbon felt was oxidized at 600°C or above, there was a significant improvement in electrode resistance and in voltage efficiency for the redox battery. Further, in all cases where oxidized carbon particles were impregnated into the carbon felt, there was a significant improvement in electrode resistance and in voltage efficiency. The best performance however was obtained in sample 4 where both the carbon felt was oxidized at higher than conventional temperatures and oxidized carbon particles were additionally impregnated into the felt.

It further appears from the results obtained with sample 6 that the soaking method of applying the ink not only leads to a greater weight of impregnated carbon particles, but also to a substantial improvement in resistance and voltage efficiency as well, when compared to the spray method of application.

Two additional vanadium redox batteries were then prepared using even larger (4.5 times or about 750 cm²) electrodes in multi-cell stacks in a format similar to commercial embodiments. A comparative stack (sample 10) comprising 8 cells electrically in series was made using oxidized carbon felt electrodes but without any incorporated carbon particles. A stack of the invention (sample 11) comprising 2 cells in series was also made using similar oxidized carbon felt electrodes in which oxidized carbon particles had been incorporated as described above. The results obtained with these two stacks are also summarized in Table 1. These results show that the carbon particle incorporation provides a further 12% reduction in resistance and improved VE during operation of the stack. The inventive stack employed identical membrane and current collector/bipolar plate material as was employed in the laboratory type cells. However, the geometric area of the stack was 4.5 times larger than that of the laboratory cell. These example results demonstrate that the method of application of the oxidized particles can be successfully scaled up to a commercial stack cell area and shows comparable performance improvements.

## Claims

1. A redox flow battery comprising an electrode comprising:
a sheet of porous carbon felt;
carbon particles impregnated into the porous carbon felt; and
ionomer impregnated into the porous carbon felt;
**characterized in that**:
the porous carbon felt is oxidized;
the carbon particles are oxidized such that they are wettable by water; and
the ionomer is a binder for the oxidized carbon particles.

2. The redox flow battery of claim 1 wherein the porous carbon felt is oxidized at a temperature above 500 °C.

3. The redox flow battery of claim 2 wherein the carbon felt is oxidized in air at 600 °C for between 18 and 22 minutes.

4. The redox flow battery of claim 1 wherein the carbon felt is at most 3.3 mm thick.

5. The redox flow battery of claim 1 wherein the carbon felt is a pyrolyzed polyacrylonitrile felt.

6. The redox flow battery of claim 1 wherein the carbon particles are carbon black or activated carbon.

7. The redox flow battery of claim 1 wherein the carbon particles are oxidized by a method selected from chemical treatment, thermal treatment, and electrochemical treatment.

8. The redox flow battery of claim 7 wherein the carbon particles are oxidized by a chemical treatment method comprising exposing the carbon particles to 1M ammonium persulfate at 70 °C.

9. The redox flow battery of claim 7 wherein the carbon particles are oxidized by a thermal treatment method comprising exposing the carbon particles to air in a range between 315 and 825 °C.

10. The redox flow battery of claim 7 wherein the specific loading of the impregnated carbon particles to the sheet of carbon felt is in the range from 0.45 to 2.53 mg/cm².

11. The redox flow battery of claim 1 wherein the ionomer is a perfluorosulfonic acid polymer, and/or wherein the weight ratio of the ionomer to the carbon particles is at most 0.055.

12. The redox flow battery of claim 1 wherein most of the mass of the oxidized carbon particles sinks or form a suspension in de-ionized water.

13. The redox flow battery of claim 1 wherein the battery is a vanadium redox flow battery.

14. A method for making the electrode of the redox flow battery of claim 1 comprising:
obtaining the sheet of oxidized porous carbon felt, the oxidized carbon particles and the ionomer;
preparing a mixture of the oxidized carbon particles, the ionomer, and a solvent, wherein the ionomer is a binder for the oxidized carbon particles;
impregnating the mixture into the porous carbon felt; and
removing the solvent from the impregnated porous carbon felt.

15. The method of claim 14 wherein the impregnating step comprises soaking the porous carbon felt in the mixture,
or wherein the impregnating step comprises spraying the porous carbon felt with the mixture,
or wherein the impregnating step comprises painting or mechanically coating the porous carbon felt with the mixture.

## Patentansprüche

1. Redox-Flussbatterie mit einer Elektrode, umfassend:
eine Bahn aus porösem Kohlenstofffilz,
Kohlenstoffpartikel, die in das poröse Kohlenstofffilz imprägniert sind, und
ein in das poröse Kohlenstofffilz imprägniertes Ionomer,
**dadurch gekennzeichnet, dass**
das poröse Kohlenstofffilz oxidiert ist,
die Kohlenstoffpartikel solchermaßen oxidiert sind, dass sie von Wasser benetzbar sind, und
das Ionomer ein Binder für die oxidierten Kohlenstoffpartikel ist.

2. Redox-Flussbatterie nach Anspruch 1, bei der das poröse Kohlenstofffilz bei einer Temperatur über 500 °C oxidiert wird.

3. Redox-Flussbatterie nach Anspruch 2, bei der das Kohlenstofffilz in Luft bei 600 °C für zwischen 18 und 22 Minuten oxidiert wird.

4. Redox-Flussbatterie nach Anspruch 1, bei der das Kohlenstofffilz höchstens 3,3 mm dick ist.

5. Redox-Flussbatterie nach Anspruch 1, bei der das Kohlenstofffilz ein pyrolysiertes Polyacrylnitril-Filz ist.

6. Redox-Flussbatterie nach Anspruch 1, bei der die Kohlenstoffpartikel Ruß oder Aktivkohle sind.

7. Redox-Flussbatterie nach Anspruch 1, bei der die Kohlenstoffpartikel oxidiert werden durch ein Verfahren ausgewählt aus einer chemischen Behandlung, einer thermischen Behandlung und einer elektrochemischen Behandlung.

8. Redox-Flussbatterie nach Anspruch 7, bei der die Kohlenstoffpartikel durch ein chemisches Behandlungsverfahren oxidiert werden, welches ein Aussetzen der Kohlenstoffpartikel einem 1M Ammoniumpersulfat bei 70 °C umfasst.

9. Redox-Flussbatterie nach Anspruch 7, bei der die Kohlenstoffpartikel durch ein thermisches Behandlungsverfahren oxidiert werden, welches ein Aussetzen der Kohlenstoffpartikel gegenüber Luft in einem Bereich zwischen 315 und 825 °C umfasst.

10. Redox-Flussbatterie nach Anspruch 7, bei der die spezifische Beladung der in die Bahn aus Kohlenstofffilz imprägnierten Kohlenstoffpartikel in dem Bereich von 0,45 bis 2,53 mg/cm² liegt.

11. Redox-Flussbatterie nach Anspruch 1, bei der das Ionomer ein Perfluorsulfonsäurenpolymer ist,
und/oder bei der das Gewichtsverhältnis des Ionomers zu den Kohlenstoffpartikeln höchstens 0,055 beträgt.

12. Redox-Flussbatterie nach Anspruch 1, bei der der Großteil der Masse der oxidierten Kohlenstoffpartikel absinkt oder eine Suspension in deionisiertem Wasser bildet.

13. Redox-Flussbatterie nach Anspruch 1, wobei die Batterie eine Vanadium-Redox-Flussbatterie ist.

14. Verfahren zum Herstellen der Elektrode der Redox-Flussbatterie nach Anspruch 1, umfassend:
Erlangen der oxidierten porösen Kohlenstofffilzbahn, der oxidierten Kohlenstoffpartikel und des Ionomers,
Anfertigen einer Mischung der oxidierten Kohlenstoffpartikel, des Ionomers und eines Lösungsmittels, wobei das Lösungsmittel ein Binder für die oxidierten Kohlenstoffpartikel ist,
Imprägnieren der Mischung in den porösen Kohlenstofffilz, und
Entfernen des Lösungsmittels aus dem imprägnierten, porösen Kohlenstofffilz.

15. Verfahren nach Anspruch 14, wobei der Imprägnierschritt ein Tränken des porösen Kohlenstofffilzes in der Mischung umfasst,
oder wobei der Imprägnierschritt ein Besprühen des porösen Kohlenstofffilzes mit der Mischung umfasst,
oder wobei der Imprägnierschritt ein Bestreichen oder mechanisches Beschichten des porösen Kohlenstofffilzes mit der Mischung umfasst.

## Revendications

1. Batterie rédox comprenant une électrode comprenant:
une feuille de feutre de carbone poreux;
des particules de carbone imprégnées dans le feutre de carbone poreux; et
un ionomère imprégné dans le feutre de carbone poreux;
**caractérisée en ce que**:
le feutre de carbone poreux étant oxydé;
les particules de carbone sont oxydées de sorte qu'elles puissent être mouillées d'eau; et
l'ionomère est un liant pour les particules de carbone oxydées.

2. Batterie rédox selon la revendication 1, le feutre de carbone poreux étant oxydé à une température supérieure à 500°C.

3. Batterie rédox selon la revendication 1, le feutre de carbone étant oxydé dans l'air à 600°C pendant une durée comprise entre 18 et 22 minutes.

4. Batterie rédox selon la revendication 1, le feutre de carbone étant d'une épaisseur de 3,3 mm au plus.

5. Batterie rédox selon la revendication 1, le feutre de carbone étant un feutre polyacrylonitrile pyrolysé.

6. Batterie rédox selon la revendication 1, les particules de carbone étant du noir de carbone ou du carbone activé.

7. Batterie rédox selon la revendication 1, les particules de carbone étant oxydées selon un procédé sélectionné parmi le traitement chimique, le traitement thermique et le traitement électrochimique.

8. Batterie rédox selon la revendication 7, les particules de carbone étant oxydées selon un procédé de traitement chimique consistant à soumettre les particules de carbones à 1M persulfate d'ammonium à 70°C.

9. Batterie rédox selon la revendication 7, les particules de carbone étant oxydées selon un procédé de traitement thermique consistant à soumettre les particules de carbone à l'air dans une plage de température comprise entre 315 et 825°C.

10. Batterie rédox selon la revendication 7, la charge spécifique des particules de carbone imprégnées par rapport à la feuille de feutre de carbone étant dans la plage comprise entre 0,45 et 2,53 mg/cm².

11. Batterie rédox selon la revendication 1, l'ionomère étant un polymère d'acide perfluorosulfonique,
et/ou le rapport massique de l'ionomère par rapport aux particules de carbone étant de 0,055 au plus.

12. Batterie rédox selon la revendication 1, la plus grande partie de la masse des particules de carbone oxydées s'affaiblit ou forme une suspension en eau déionisée.

13. Batterie rédox selon la revendication 1, la batterie étant une batterie rédox au vanadium.

14. Procédé de fabrication de l'électrode de la batterie rédox selon la revendication 1, consistant à:
obtenir la feuille de feutre de carbone poreux oxydée, les particules de carbones oxydées et l'ionomère;
préparer la feuille de feutre de carbone poreux oxydée, l'ionomère, et un solvant, l'ionomère étant un liant pour les particules carbonées oxydées;
imprégner le mélange dans le feutre de carbone poreux; et
retirer le solvant du feutre de carbone poreux imprégné.

15. Procédé selon la revendication 14, l'étape d'imprégnation consistant à infiltrer le feutre de carbone poreux dans le mélange,
Ou l'étape d'imprégnation consistant à pulvériser le mélange sur le feutre de carbone poreux,
ou l'étape d'imprégnation consistant à peintre ou à revêtir mécaniquement le feutre de carbone poreux avec le mélange.
